# FASCICULE DE BREVET EUROPEEN

(11) **EP 4 593 673 B1**
(45) Date de publication et mention de la délivrance du brevet: **07.10.2026**
(21) Numéro de dépôt: 23776958.3
(22) Date de dépôt: 25.09.2023
(51) Int. Cl.: A47J 36/06, A47J 45/06

(54) **COUVERCLE D'ARTICLE CULINAIRE MUNI D'UN ORGANE DE PREHENSION AMÉLIORÉ**
KÜCHENARTIKELDECKEL MIT VERBESSERTEM GRIFFELEMENT
CULINARY ARTICLE LID PROVIDED WITH AN IMPROVED GRIPPING MEMBER

(30) Priorité: 27.09.2022 FR 2209798
(43) Date de publication de la demande: 06.08.2025
(73) Titulaire: SEB S.A., 69130 Ecully (FR)
(72) Inventeur: BERGERET, Nathalie, 69134 ECULLY CEDEX (FR); MOUKASSI, Aude, 69134 ECULLY CEDEX (FR); MONTGELARD, Michel, 69134 ECULLY CEDEX (FR); GUEGAN, Laurent, 69134 ECULLY CEDEX (FR)
(74) Mandataire: SEB Développement
(86) Numéro de dépôt international: PCT/EP2023/076436
(87) Numéro de publication internationale: WO 2024/068567

(56) Documents cités:
- EP-A1- 1 871 206
- US-A1- 2015 313 403
- US-A1- 2016 353 913

## Description

### Domaine technique

La présente invention se rapporte à un couvercle d'article culinaire qui comporte un organe de préhension, par exemple un couvercle de casserole, de sauteuse, de poêle.

### Etat de la technique

Il est connu du document EP1871206 un couvercle d'article culinaire, comprenant un organe de préhension comprenant un socle fixé au couvercle et au moins un volet qui porte une surface de préhension. L'au moins un volet est mobile en rotation par rapport au socle entre une position d'empilement dans laquelle la surface de préhension est rabattue vers le couvercle pour permettre l'empilement du couvercle avec un autre couvercle similaire et une position de préhension dans laquelle la surface de préhension est écartée du couvercle. L'organe de préhension comporte un moyen élastique entraînant le volet de sa position d'empilement à sa position de préhension.

Cependant, l'au moins un volet qui est réalisé en matière plastique peut être fragilisé, notamment au niveau de sa liaison en rotation avec le socle, lors des chauffes et refroidissements successifs du couvercle.

De plus, l'utilisation d'une matière plastique pour réaliser l'au moins un volet peut faire baisser la qualité perçue par l'utilisateur du couvercle et de l'organe de préhension

### Résumé de l'invention

La présente invention vise à remédier à ces inconvénients.

Le problème technique à la base de l'invention consiste à proposer un couvercle d'article culinaire muni d'un organe de préhension qui présente un fonctionnement sûr et ergonomique.

Un autre but de l'invention est de proposer couvercle d'article culinaire muni d'un organe de préhension qui présente une conception simple et économique à mettre en œuvre.

A cet effet, l'invention a pour objet un couvercle d'article culinaire, comprenant un organe de préhension comprenant un socle fixé au couvercle et au moins un volet qui porte une surface de préhension, ledit au moins un volet étant mobile en rotation par rapport au socle entre une position d'empilement dans laquelle la surface de préhension est rabattue vers le couvercle pour permettre l'empilement du couvercle avec un autre couvercle similaire et une position de préhension dans laquelle la surface de préhension est écartée du couvercle, ledit organe de préhension comportant un moyen élastique entraînant le volet de sa position d'empilement à sa position de préhension, caractérisé en ce que l'au moins un volet est réalisé en acier inoxydable austénitique, ou en acier inoxydable duplex, ou en acier inoxydable super austénitique, ou en alliage de titane alpha-beta, et en ce que l'au moins un volet présente une forme en C dont une longueur développée L est supérieure à 110 millimètres, de préférence supérieure à 160 millimètres.

Ainsi, l'utilisation d'un matériau métallique, notamment un acier inoxydable, ou un alliage de titane, pour réaliser l'au moins un volet améliore la résistance mécanique de l'organe de préhension.

L'utilisation d'un acier inoxydable austénitique qui présente une conductivité thermique faible pour réaliser l'au moins un volet permet de freiner les flux thermiques partant du couvercle vers la surface de préhension.

De manière avantageuse, l'acier inoxydable austénitique présente une conductivité thermique inférieure à 17 W/m.K.

L'utilisation d'un acier inoxydable duplex, c'est-à-dire un acier inoxydable comportant une microstructure biphasée austénitique et ferritique, qui présente une conductivité thermique faible pour réaliser l'au moins un volet permet de freiner les flux thermiques partant du couvercle vers la surface de préhension.

De manière avantageuse, l'acier inoxydable duplex présente une conductivité thermique inférieure ou égale à 17 W/m.K.

L'utilisation d'un acier inoxydable super austénitique qui présente une conductivité thermique faible pour réaliser l'au moins un volet permet de freiner les flux thermiques partant du couvercle vers la surface de préhension.

De manière avantageuse, l'acier inoxydable super austénitique présente une conductivité thermique inférieure ou égale à 9 W/m.K.

L'utilisation d'un alliage de titane alpha-beta qui présente une conductivité thermique faible pour réaliser l'au moins un volet permet de freiner les flux thermiques partant du couvercle vers la surface de préhension.

De manière avantageuse, l'alliage de titane alpha-beta présente une conductivité thermique inférieure ou égale à 8 W/m.K.

Par une longueur développée L de la forme en C de l'au moins un volet, on comprend une longueur développée L d'une fibre positionnée au centre d'une section transversale de la forme en C de l'au moins un volet, prise notamment entre des points d'articulation de l'au moins un volet.

Une longueur développée L de la forme en C de l'au moins un volet supérieure à 110 millimètres est suffisamment longue pour ralentir les flux thermiques partant des points d'articulation de l'au moins un volet vers la surface de préhension.

Pour un organe de préhension métallique, Il existe un test normatif imposant des limites de température à ne pas dépasser en utilisation sur une plaque de chauffe, notamment au niveau de la surface de préhension métallique. Cette limite est fixée à 55°C pour la surface de préhension suivant un protocole détaillé dans la norme EN 12983-1 (Annexe F). Au-delà de cette température de 55°C, le fabriquant doit indiquer à l'utilisateur qu'il faut utiliser un moyen de protection thermique du type manique pour manipuler l'organe de préhension.

La combinaison de ces deux caractéristiques : l'au moins un volet réalisé en acier inoxydable austénitique, ou en acier inoxydable duplex, ou en acier inoxydable super austénitique, ou en alliage de titane alpha-beta, et une longueur développée L de la forme en C de l'au moins un volet supérieure à 110 millimètres permettent d'obtenir une température en utilisation de la surface de préhension inférieure à 55°C suivant le test normatif.

De plus, l'utilisation d'un matériau métallique pour réaliser l'au moins un volet améliore la qualité perçue par l'utilisateur du couvercle et de l'organe de préhension.

Avantageusement, la forme en C de l'au moins un volet présente une section transversale S inférieure à 30 millimètres carrés.

Une section transversale S faible permet également de ralentir les flux thermiques partant des points d'articulation de l'au moins un volet vers la surface de préhension.

De manière avantageuse, la section transversale S est en progression entre une zone de liaison en rotation avec le socle et la surface de préhension.

De préférence, la section transversale S de l'au moins un volet présente une épaisseur E comprise entre 2 et 3 millimètres.

Avantageusement, l'épaisseur E de la section transversale S de l'au moins un volet est sensiblement constante.

Une telle disposition permet de réaliser le volet par découpe à partir d'un feuillard métallique. Un tel mode de réalisation est particulièrement économique.

De préférence, la surface de préhension est agencée dans une portion centrale de la forme en C et, dans la position de préhension du volet, la surface de préhension est agencée à une distance D du couvercle, la distance D étant supérieure à 20 millimètres.

Par la surface de préhension est agencée à une distance D du couvercle, on comprend que la distance D est prise à partir d'une extrémité basse de la surface de préhension dans la position de préhension.

De manière avantageuse, l'au moins un volet présente une forme en C aplati , la surface de préhension étant agencée dans une portion centrale sensiblement droite de la forme en C aplati, la surface de préhension présentant une longueur LP supérieure à 60 millimètres.

De telles dispositions permettent d'obtenir une température en utilisation de la surface de préhension inférieure à 45°C.

Avantageusement, l'au moins un volet est mobile par rapport au socle selon un axe de rotation parallèle à un plan tangent au couvercle au niveau du socle.

De préférence, l'au moins un volet dans la position de préhension est orienté selon un plan faisant avec le plan tangent au couvercle un angle compris entre 30° et 60°, et de préférence, égal à 45°.

Ainsi, la surface de préhension est suffisamment écartée du couvercle pour être facilement saisie par l'utilisateur.

Avantageusement, l'au moins un volet est mobile jusque dans une position de transport dans laquelle il est sensiblement normal au plan tangent.

De préférence, l'organe de préhension comprend deux volets, les deux axes de rotation des volets étant parallèles l'un à l'autre.

Les deux volets peuvent être réalisés dans le même matériau.

Les deux volets peuvent aussi être réalisés dans deux matériaux différents.

Avantageusement, le socle est réalisé en une matière plastique thermodurcissable, notamment en bakélite.

Ainsi, le socle fait office d'une première barrière thermique pour limiter le flux thermique du couvercle vers l'au moins un volet.

L'acier inoxydable austénitique peut être un acier inoxydable austénitique de type AISI 304.

L'alliage de titane alpha-beta peut être un alliage de titane Ti₆Al₄V.

### Brève description des figures

On comprendra mieux les buts, aspects et avantages de la présente invention, d'après la description donnée ci-après de modes particuliers de réalisation de l'invention présentés à titre d'exemples non limitatifs, en se référant aux dessins annexés dans lesquels :
[Fig.1] La [Fig.1] est une vue en perspective d'un couvercle d'article culinaire muni d'un organe de préhension selon un mode particulier de réalisation de l'invention.
[Fig.2] La [Fig.2] est une est une vue en perspective éclatée de l'organe de préhension du couvercle de la [Fig.1].
[Fig.3] La [Fig.3] est une vue en coupe d'un empilement de deux couvercles, les volets de l'organe de préhension du couvercle inférieur étant en position d'empilement, ceux de l'organe de préhension du couvercle supérieur étant en position de préhension, le couvercle de la [Fig.1] étant le couvercle inférieur représenté suivant un plan de coupe vertical suivant la ligne IV-IV.
[Fig.4] La [Fig.4] est une vue en coupe partielle suivant le plan de coupe vertical suivant la ligne IV-IV du couvercle muni de l'organe de préhension de la [Fig.1].
[Fig.5] La [Fig.5] est une vue du dessus de l'organe de préhension du couvercle de la [Fig.1], les volets de l'organe de préhension du couvercle étant en position d'empilement.

Seuls les éléments nécessaires à la compréhension de l'invention ont été représentés. Pour faciliter la lecture des dessins, les mêmes éléments portent les mêmes références d'une figure à l'autre.

On notera que dans ce document, les termes "horizontal", "vertical", "inférieur", "supérieur", "haut", "bas", "avant", "arrière", "longitudinal", "transversal", employés pour décrire le couvercle d'article culinaire muni d'un organe de préhension font référence à ce couvercle reposant sur un article culinaire, en situation d'usage.

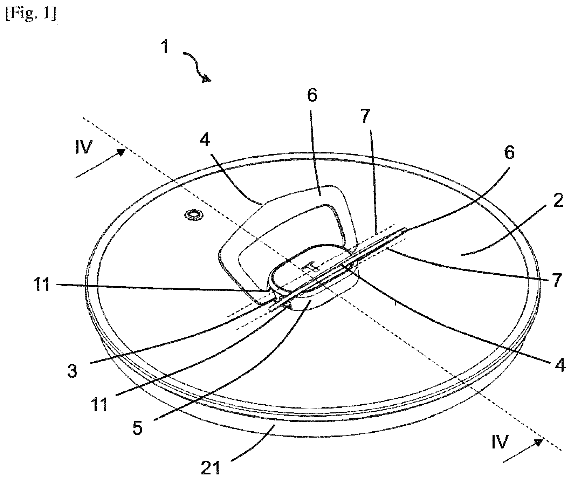

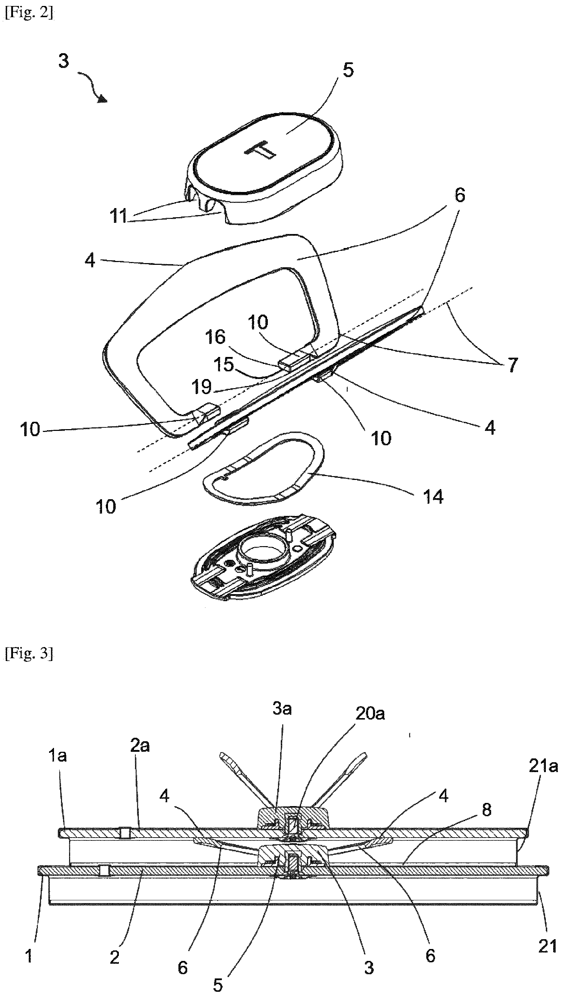

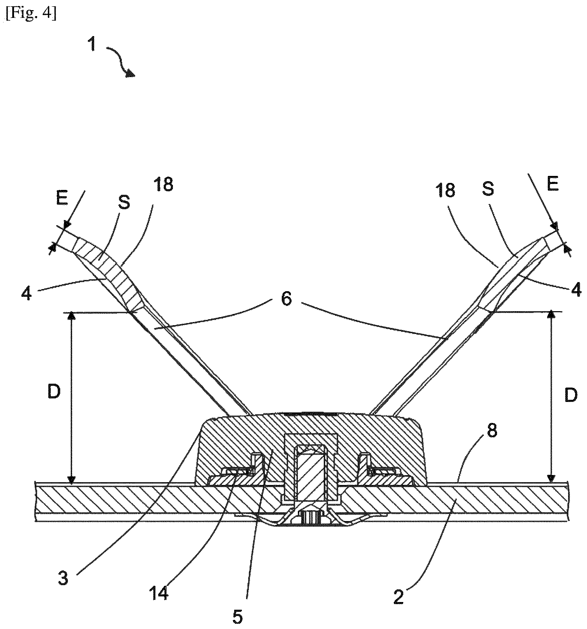

Dans l'exemple de réalisation représenté aux figures 1 à 5, un couvercle 1 pour article culinaire comprend un capot 2 qui est adapté à recouvrir l'article culinaire, et un organe de préhension 3 qui est adapté à permettre la préhension du couvercle 1. L'organe de préhension 3 est transformable et comprend au moins deux états : un état d'empilement dans lequel il ne gêne pas l'empilement du couvercle avec un autre couvercle 1a, comme on peut le voir à la [Fig.3], et un état de préhension dans laquelle il présente une surface de préhension 4 dégagée du couvercle 1 (et plus précisément, dégagée du capot 2), comme on peut le voir aux figures 3 et 4.

L'organe de préhension 3 comprend un socle 5 qui est fixé au capot 2, et deux volets 6 qui portent la surface de préhension 4 de l'organe de préhension 3, les volets 6 étant mobiles par rapport au socle 5 entre au moins une position d'empilement et une position de préhension dans laquelle la surface de préhension 4 est sans contact avec le capot 2, ces positions correspondant, respectivement, aux positions d'empilement et de préhension de l'organe de préhension 3.

Chaque volet 6 présente une forme en C aplati. Chaque volet 6 est monté rotatif par rapport au socle 5 selon un axe de rotation 7 qui est parallèle à un plan tangent 8 au capot 2 au niveau du socle 5. Les deux axes de rotation 7 des volets 6 sont parallèles l'un à l'autre. Afin de permettre cette articulation, chaque volet 6 comporte deux arbres 10 qui sont agencés diamétralement opposés l'un à l'autre et qui s'étendent dans le prolongement des extrémités libres de la forme en C. La surface de préhension 4 est agencée dans une portion centrale 12 sensiblement droite de la forme en C aplati. Le socle 5 comprend, pour chaque volet 6, deux ouvertures 11 qui se font face et qui sont adaptées à recevoir, chacune un arbre 10 du volet 6.

Selon un premier mode de réalisation, chaque volet 6 est réalisé en acier inoxydable austénitique de type AISI 304. Cet acier inoxydable austénitique présente une conductivité thermique égale à 16,2 W/m.K à 100°C. Une telle conductivité thermique est particulièrement faible, notamment par rapport à un acier inoxydable ferritique. Par exemple, un acier inoxydable ferritique de type AISI 430 présente une conductivité thermique égale à 26,1 W/m.K à 100°C.

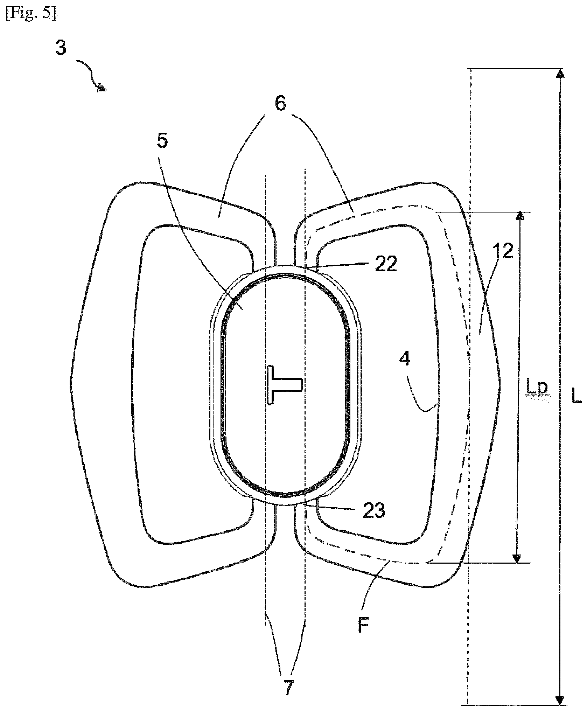

Tel que visible sur la [Fig.5], la forme en C de chaque volet 6 présente une longueur développée L égale à 161 millimètres. Par une longueur développée L de la forme en C d'un volet 6, on comprend une longueur développée L d'une fibre F positionnée au centre d'une section transversale de la forme en C du volet 6, prise entre des points d'articulation 22, 23 du volet 6. Le trait mixte vertical visible sur la [Fig.5] correspond au développé de la fibre F selon un axe vertical.

Tel que visible sur la [Fig.4], la forme en C de chaque volet 6 présente une section transversale S égale à 29 millimètres carré prise dans un plan de coupe médian vertical de la [Fig.4], au niveau de la surface de préhension 4. La section transversale S de chaque volet 6 présente une épaisseur E, sensiblement constante sur la longueur développée L, égale à 2 millimètres. la section transversale S est en progression entre les points d'articulation 22, 23 avec le socle formée et la surface de préhension 4. La surface de préhension 4 présente une longueur LP égale à 75 millimètres correspondant à la portion centrale 12 ([Fig.5]) sensiblement droite de la forme en C.

Comme on peut le voir aux figures 3 et 4, quand un volet 6 est dans sa position de préhension, il est incliné par rapport au plan tangent 8 de façon à rendre accessible la surface de préhension 4. Afin de permettre une préhension aisée, chaque volet 6 en position de préhension est orienté selon un plan faisant 45° avec le plan tangent 8. Dans la position de préhension du volet 6, la surface de préhension 4 est agencée à une distance D du capot 2 du couvercle 1 égale à 26 millimètres ([Fig.4]).La distance D est mesurée par rapport au point de la zone de préhension 4 le plus proche du capot 2.

Avec de telles caractéristiques, la température de la surface de préhension 4 suivant le protocole détaillé dans la norme EN 12983-1 (Annexe F) est inférieure à 45°C. Une telle température est bien inférieure au 55°C requis par la norme pour éviter d'utiliser le couvercle 1 sans protection des mains de l'utilisateur. Une telle température permet également un confort thermique en évitant une sensation de chaud lors de la prise en main des surfaces de préhension 4 par l'utilisateur.

Dans le présent mode de réalisation, pour des couvercles 1 dont les capots 2 ont un diamètre extérieur compris entre 140 et 280 mm, le socle 5 présente une forme oblongue. Le socle est réalisé en une matière plastique thermodurcissable, notamment en bakélite. Comme on peut le voir à la [Fig.3], quand un volet 6 est en position d'empilement, la surface de préhension 4 est tournée contre le capot 2. Quand il est en position d'empilement, le volet 6 est sensiblement parallèle au plan tangent 8. La faible épaisseur de l'organe de préhension 3 dans son état d'empilement fait qu'il n'interfère pas avec un capot 2a du couvercle 1a reposant sur le couvercle 1 qui le porte. L'épaisseur de l'organe de préhension 3 en état d'empilement est inférieure à la distance séparant, au niveau de l'organe de préhension 3, une surface supérieure du capot 2 du couvercle 1 portant cet organe 3 d'une vis de fixation 20a de l'organe de préhension 3a du couvercle 1a.

Les épaisseurs du socle 5 et de chaque volet 6 sont inférieures aux distances séparant, au niveau de ces différents éléments 5,6, la surface supérieure 12 du capot 2 du couvercle 1 portant ces éléments 5,6 d'une surface inférieure du capot 2a du couvercle 1a posé sur le premier couvercle 1, en tenant compte, pour les volets 6, de leur orientation. La différence de niveau entre les capots inférieur 2 et supérieur 2a est principalement imposé par la hauteur d'un jonc périphérique circulaire 21,21a bordant chacun des capots 2,2a plans ou légèrement bombés.

Le couvercle 1 comprend un moyen élastique 14 qui entraîne le volet 6 de sa position d'empilement à sa position de préhension. De ce fait, quand un couvercle 1 est disposé sur un article culinaire posé sur une plaque de chauffe, du fait de la présence du moyen élastique 14, le volet 6 est dans sa position de préhension et la surface de préhension 4 est dégagée du capot 2. Ainsi la surface de préhension 4 n'est pas chauffée et peut être facilement saisie par un utilisateur

L'élasticité du moyen élastique 14 est telle que le poids d'un objet tel qu'un couvercle d'article culinaire posé sur le volet 6 entraîne ce dernier de sa position de préhension à sa position d'empilement.

Tel que visible à la [Fig.2], le moyen élastique est formé par un ressort 14 plat de forme oblongue et qui est logé dans le socle 5. Chaque arbre 10 de chaque volet 6 comprend une surface d'appui 15 sur laquelle repose le ressort 14, la surface d'appui 15 faisant, avec la surface définie par le volet 6, un angle qui est égal à l'angle du volet 6 en position de préhension avec le plan tangent 8, le ressort 14 plat étant disposé selon le plan tangent 8. Ainsi, quand les volets 6 sont dans leur position d'empilement, le ressort 14 appuie sur des premiers bords axiaux 16 des arbres 10 et entraîne chaque arbre 10 jusqu'à ce qu'il prenne appui sur l'ensemble de la surface d'appui 15.

Chaque volet 6 est mobile au-delà de la position de préhension, jusque dans une position de transport dans laquelle il s'étend selon un plan sensiblement parallèle au plan normal au plan tangent 8. Quand ils sont en position de transport, les deux volets 6 sont en butée l'un contre l'autre par l'intermédiaire de leur surface de butée 18 qui est à l'opposée de leur surface de préhension 4. Quand ils sont dans leur position de transport, les volets 6 sont entraînés par le moyen élastique 14 vers leur position de préhension : le ressort 14 s'appuie en effet sur des seconds bords axiaux 19 des arbres 10 et entraîne chaque arbre 10 jusqu'à ce qu'il prenne appui sur l'ensemble de la surface d'appui 15.

Afin d'améliorer la tenue du couvercle 1, l'organe de préhension 3 est conformé de sorte que les deux volets 6 en position de transport se comportent comme une pièce fixe (ou quasiment fixe) par rapport au capot 2, les deux volets 6 ne pouvant coulisser l'un contre l'autre.

En fonctionnement, l'utilisateur n'a qu'à rapprocher par pincement les volets 6 de leur position de préhension jusqu'à ce qu'ils viennent en butée l'un contre l'autre dans la position de transport dans laquelle, quand ils sont tenus par l'utilisateur, ils sont stables. La température de la zone de préhension de chaque volet est inférieure à 45°C et l'utilisateur n'a pas de précautions particulières à prendre pour manipuler le couvercle. Quand l'utilisateur libère les volets 6 ceux-ci passent alors de leur position de transport à leur position de préhension.

Selon un deuxième mode de réalisation, chaque volet 6 est réalisé en acier inoxydable duplex, qui comporte une microstructure biphasée austénitique et ferritique. Les aciers inoxydables duplex présentent une conductivité thermique similaire à celle des aciers inoxydables austénitiques. L'acier inoxydable duplex Sandvik SAF 2205^{®} présente une conductivité thermique égale à 16 W/m.K à 100°C. L'acier inoxydable duplex Sandvik SAF 2304^{®} présente une conductivité thermique égale à 17 W/m.K à 100°C.

Selon un troisième mode de réalisation, chaque volet 6 est réalisé en acier inoxydable super austénitique de type EN1.4652 X1CrNiMoCuN24-22-8. Un tel acier inoxydable super-austénitique présente une conductivité thermique égale à 8,6 W/m.K à 20°C , soit près de 2 fois moins que les aciers inoxydables austénitiques ou les aciers inoxydables duplex.

Selon un quatrième mode de réalisation, chaque volet 6 est réalisé en alliage de titane alpha-beta. De tels alliages de titane alpha-beta présentent une conductivité thermique inférieure à 8 W/m.K à 20°C.

L'alliage de titane alpha-beta le plus utilisé est l'alliage de titane Ti₆Al₄V, également appelé TA6V ou TITANE GRADE 5. La composition de l'alliage de titane Ti₆Al₄V est la suivante :

**[Tableaux1]**

| Elément | Contenance en % |
|---|---|
| Aluminium | De 5,5 à 6,75 |
| Vanadium | De 3,5 à 4,5 |
| Carbone | Maximum 0,10 |
| Fer | Maximum 0,30 |
| Oxygène | Maximum 0,02 |
| Nitrogène | Maximum 0,05 |
| Titane | Somme/base |

Un autre alliage de titane alpha-beta est l'alliage de titane Ti-6Al-6V-2Sn, également appelé TA6VE. La composition de l'alliage de titane Ti-6Al-6V-2Sn est la suivante :

**[Tableaux2]**

| Elément | Contenance en % |
|---|---|
| Aluminium | De 5,0 à 6,0 |
| Vanadium | De 5,0 à 6,0 |
| Etain | De 1,5 à 2,5 |
| Carbone | Maximum 0,05 |
| Fer | Maximum 0,30 |
| Oxygène | Maximum 0,02 |
| Nitrogène | Maximum 0,05 |
| Titane | Somme/base |

Un autre alliage de titane alpha-beta est l'alliage de titane Ti-5Al-2Sn-2Zr-4Mo-4Cr, également appelé TITANE GRADE 17. La composition de l'alliage de titane Ti-5Al-2Sn-2Zr-4Mo-4Cr est la suivante :

**[Tableaux3]**

| Elément | Contenance en % |
|---|---|
| Aluminium | De 4,5 à 5,5 |
| Chrome | De 3,5 à 4,5 |
| Molybdène | De 3,5 à 4,5 |
| Etain | De 1,5 à 2,5 |
| Zirconium | De 1,5 à 2,5 |
| Fer | Maximum 0,3 |
| Oxygène | Maximum 0,02 |
| Nitrogène | Maximum 0,05 |
| Titane | Somme/base |

Comparaison des caractéristiques thermiques des alliages :

**[Tableaux4]**

| | Acier inoxydable 430 | Acier inoxydable 304 | Ti₆Al₄V | Ti-6Al-6V-2 Sn | Ti-5Al-2Sn-2 Zr-4Mo-4Cr |
|---|---|---|---|---|---|
| Conductivité (W/m/K) | 25 | 15 | 6,7 | 6,6 | 7,8 |
| Densité (kg/m³) | 7700 | 7700 | 4430 | 4540 | 4650 |
| Cp (J/kg/K) | 480 | 480 | 525 | 670 | 525 |
| Diffusivité (100000*m²/s) | 6.76 | 4.06 | 2.88 | 2,17 | 3,20 |

A titre de variante, les deux volets 6 ne sont pas nécessairement réalisés dans le même matériau.

A titre de variante, le couvercle 1 ne comporte pas nécessairement deux volets 6.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non illustrée, la section transversale S de l'au moins un volet 6 est constante, la section transversale S étant prise entre les points d'articulation 22, 23.

## Revendications

1. Couvercle (1) d'article culinaire, comprenant un organe de préhension (3) comprenant un socle (5) fixé au couvercle (1) et au moins un volet (6) qui porte une surface de préhension (4), ledit au moins un volet (6) étant mobile en rotation par rapport au socle (5) entre une position d'empilement dans laquelle la surface de préhension (4) est rabattue vers le couvercle (1) pour permettre l'empilement du couvercle (1) avec un autre couvercle (1a) similaire et une position de préhension dans laquelle la surface de préhension (4) est écartée du couvercle (1), ledit organe de préhension (3) comportant un moyen élastique (14) entraînant le volet (6) de sa position d'empilement à sa position de préhension, **caractérisé en ce que** l'au moins un volet (6) est réalisé en acier inoxydable austénitique, ou en acier inoxydable duplex, ou en acier inoxydable super austénitique, ou en alliage de titane alpha-beta, et **en ce que** l'au moins un volet (6) présente une forme en C dont une longueur développée L est supérieure à 110 millimètres, de préférence supérieure à 160 millimètres.

2. Couvercle (1) d'article culinaire selon la revendication 1, **caractérisé en ce que** la forme en C de l'au moins un volet (6) présente une section transversale S inférieure à 30 millimètres carrés.

3. Couvercle (1) d'article culinaire selon la revendication 2, **caractérisé en ce que** la section transversale S de l'au moins un volet (6) présente une épaisseur E comprise entre 2 et 3 millimètres.

4. Couvercle (1) d'article culinaire selon la revendication 3, **caractérisé en ce que** l'épaisseur E de la section transversale S de l'au moins un volet (6) est sensiblement constante.

5. Couvercle (1) d'article culinaire selon l'une quelconque des revendications 1 à 4, **caractérisé en ce que** la surface de préhension (4) est agencée dans une portion centrale (12) de la forme en C et **en ce que**, dans la position de préhension du volet (6), la surface de préhension (4) est agencée à une distance D du couvercle (1), la distance D étant supérieure à 20 millimètres.

6. Couvercle (1) d'article culinaire selon l'une quelconque des revendications 1 à 5, **caractérisé en ce que** l'au moins un volet (6) est mobile par rapport au socle (5) selon un axe de rotation (7) parallèle à un plan tangent (8) au couvercle (1) au niveau du socle (5).

7. Couvercle (1) d'article culinaire selon la revendication 6, **caractérisé en ce que** l'au moins un volet (6) dans la position de préhension est orienté selon un plan faisant avec le plan tangent (8) au couvercle (1) un angle compris entre 30° et 60°, et de préférence, égal à 45°.

8. Couvercle (1) d'article culinaire selon l'une quelconque des revendications 6 à 7, **caractérisé en ce que** l'au moins un volet (6) est mobile jusque dans une position de transport dans laquelle il est sensiblement normal au plan tangent (8).

9. Couvercle (1) d'article culinaire selon l'une quelconque des revendications 6 à 8, **caractérisé en ce que** l'organe de préhension (3) comprend deux volets (6), les deux axes de rotation (7) des volets (6) étant parallèles l'un à l'autre.

10. Couvercle (1) d'article culinaire selon la revendication 9, **caractérisé en ce que** les deux volets (6) sont réalisés dans le même matériau.

11. Couvercle (1) d'article culinaire selon l'une quelconque des revendications 1 à 9, **caractérisé en ce que** le socle (5) est réalisé en une matière plastique thermodurcissable, notamment en bakélite.

12. Couvercle (1) d'article culinaire selon l'une des revendications 1 à 11, **caractérisé en ce que** l'acier inoxydable austénitique est un acier inoxydable austénitique de type AISI 304.

13. Couvercle (1) d'article culinaire selon l'une des revendications 1 à 11, **caractérisé en ce que** l'alliage de titane alpha-beta est un alliage de titane Ti6Al4V.

## Patentansprüche

1. Deckel (1) eines Kochgeschirrtartikels, umfassend ein Greiforgan (3), umfassend einen Sockel (5), der am Deckel (1) befestigt ist, und mindestens eine Klappe (6), die eine Greiffläche (4) trägt, wobei die mindestens eine Klappe (6) relativ zu dem Sockel (5) drehbeweglich ist zwischen einer Stapelstellung, in welcher die Greiffläche (4) in Richtung des Deckels (1) umgeklappt ist, um das Stapeln des Deckels (1) mit einem anderen ähnlichen Deckel (1a) zu ermöglichen, und einer Greifstellung, in welcher die Greiffläche (4) von dem Deckel (1) entfernt ist, wobei das Greiforgan (3) ein elastisches Mittel (14) umfasst, das die Klappe (6) von ihrer Stapelstellung in ihre Greifstellung führt, **dadurch gekennzeichnet, dass** die mindestens eine Klappe (6) aus austenitischem Edelstahl oder aus Duplex-Edelstahl oder aus superaustenitischem Edelstahl oder aus Alpha-Beta-Titanlegierung hergestellt ist und dass die mindestens eine Klappe (6) eine C-Form mit einer abgewickelten Länge L aufweist, die größer als 110 Millimeter, vorzugsweise größer als 160 Millimeter ist.

2. Deckel (1) eines Kochgeschirrtartikels nach Anspruch 1, **dadurch gekennzeichnet, dass** die C-Form der mindestens einen Klappe (6) einen Querschnitt S aufweist, der kleiner als 30 Quadratmillimeter ist.

3. Deckel (1) eines Kochgeschirrtartikels nach Anspruch 2, **dadurch gekennzeichnet, dass** der Querschnitt S der mindestens einen Klappe (6) eine Dicke E aufweist, die zwischen 2 und 3 Millimeter liegt.

4. Deckel (1) eines Kochgeschirrtartikels nach Anspruch 3, **dadurch gekennzeichnet, dass** die Dicke E des Querschnitts S der mindestens einen Klappe (6) im Wesentlichen konstant ist.

5. Deckel (1) eines Kochgeschirrtartikels nach einem der Ansprüche 1 bis 4, **dadurch gekennzeichnet, dass** die Greiffläche (4) in einem zentralen Abschnitt (12) der C-Form angeordnet ist und dass in der Greifstellung der Klappe (6) die Greiffläche (4) in einem Abstand D von dem Deckel (1) angeordnet ist, wobei der Abstand D größer als 20 Millimeter ist.

6. Deckel (1) eines Kochgeschirrtartikels nach einem der Ansprüche 1 bis 5, **dadurch gekennzeichnet, dass** die mindestens eine Klappe (6) relativ zu dem Sockel (5) um eine Drehachse (7) beweglich ist, die parallel zu einer Tangentialebene (8) an den Deckel (1) auf Höhe des Sockels (5) verläuft.

7. Deckel (1) eines Kochgeschirrtartikels nach Anspruch 6, **dadurch gekennzeichnet, dass** die mindestens eine Klappe (6) in der Greifstellung in einer Ebene ausgerichtet ist, die mit der Tangentialebene (8) an den Deckel (1) einen Winkel zwischen 30° und 60° bildet und vorzugsweise 45° beträgt.

8. Deckel (1) eines Kochgeschirrtartikels nach einem der Ansprüche 6 bis 7, **dadurch gekennzeichnet, dass** die mindestens eine Klappe (6) bis in eine Transportstellung beweglich ist, in welcher sie im Wesentlichen senkrecht zur Tangentialebene (8) steht.

9. Deckel (1) eines Kochgeschirrtartikels nach einem der Ansprüche 6 bis 8, **dadurch gekennzeichnet, dass** das Greiforgan (3) zwei Klappen (6) umfasst, wobei die zwei Drehachsen (7) der Klappen (6) zueinander parallel sind.

10. Deckel (1) eines Kochgeschirrtartikels nach Anspruch 9, **dadurch gekennzeichnet, dass** die zwei Klappen (6) aus demselben Material hergestellt sind.

11. Deckel (1) eines Kochgeschirrtartikels nach einem der Ansprüche 1 bis 9, **dadurch gekennzeichnet, dass** der Sockel (5) aus einem duroplastischen Kunststoffmaterial hergestellt ist, insbesondere aus Bakelit.

12. Deckel (1) eines Kochgeschirrtartikels nach einem der Ansprüche 1 bis 11, **dadurch gekennzeichnet, dass** der austenitische Edelstahl ein austenitischer Edelstahl vom Typ AISI 304 ist.

13. Deckel (1) eines Kochgeschirrtartikels nach einem der Ansprüche 1 bis 11, **dadurch gekennzeichnet, dass** die Alpha-Beta-Titanlegierung eine Ti6A14V-Titanlegierung ist.

## Claims

1. Lid (1) of a cookware article, comprising a grasping member (3) comprising a base (5) fixed to the lid (1) and at least one flap (6) which carries a grasping surface (4), said at least one flap (6) being rotatable relative to the base (5) between a stacking position in which the grasping surface (4) is folded down toward the lid (1) to allow stacking of the lid (1) with another similar lid (1a) and a grasping position in which the grasping surface (4) is spaced apart from the lid (1), said grasping member (3) comprising an elastic means (14) driving the flap (6) from its stacking position to its grasping position, **characterized in that** the at least one flap (6) is made of austenitic stainless steel, or duplex stainless steel, or super austenitic stainless steel, or alpha-beta titanium alloy, and **in that** the at least one flap (6) has a C-shape whose developed length L is greater than 110 millimeters, preferably greater than 160 millimeters.

2. Lid (1) of a cookware article according to claim 1, **characterized in that** the C-shape of the at least one flap (6) has a cross section S of less than 30 square millimeters.

3. Lid (1) of a cookware article according to claim 2, **characterized in that** the cross section S of the at least one flap (6) has a thickness E of between 2 and 3 millimeters.

4. Lid (1) of a cookware article according to claim 3, **characterized in that** the thickness E of the cross section S of the at least one flap (6) is substantially constant.

5. Lid (1) of a cookware article according to any one of claims 1 to 4, **characterized in that** the grasping surface (4) is arranged in a central portion (12) of the C-shape and **in that**, in the grasping position of the flap (6), the grasping surface (4) is arranged at a distance D from the lid (1), the distance D being greater than 20 millimeters.

6. Lid (1) of a cookware article according to any one of claims 1 to 5, **characterized in that** the at least one flap (6) is movable relative to the base (5) about an axis of rotation (7) parallel to a tangent plane (8) to the lid (1) at the level of the base (5).

7. Lid (1) of a cookware article according to claim 6, **characterized in that** the at least one flap (6) in the grasping position is oriented in a plane forming, with the tangent plane (8) to the lid (1), an angle of between 30° and 60°, and preferably equal to 45°.

8. Lid (1) of a cookware article according to any one of claims 6 to 7, **characterized in that** the at least one flap (6) is movable into a transport position in which it is substantially normal to the tangent plane (8).

9. Lid (1) of a cookware article according to any one of claims 6 to 8, **characterized in that** the grasping member (3) comprises two flaps (6), the two axes of rotation (7) of the flaps (6) being parallel to one another.

10. Lid (1) of a cookware article according to claim 9, **characterized in that** the two flaps (6) are made of the same material.

11. Lid (1) of a cookware article according to any one of claims 1 to 9, **characterized in that** the base (5) is made of a thermosetting plastic material, in particular of Bakelite.

12. Lid (1) of a cookware article according to any one of claims 1 to 11, **characterized in that** the austenitic stainless steel is an austenitic stainless steel of AISI 304 type.

13. Lid (1) of a cookware article according to any one of claims 1 to 11, **characterized in that** the alpha-beta titanium alloy is a Ti6A14V titanium alloy.
